# EUROPÄISCHE PATENTSCHRIFT

(11) **EP 0 864 121 B1**
(45) Veröffentlichungstag und Bekanntmachung des Hinweises auf die Patenterteilung: **09.02.2000**
(21) Anmeldenummer: 96937315.8
(22) Anmeldetag: 31.10.1996
(51) Int. Cl.: G05B 19/4099

(54) **VERFAHREN ZUR FRÄSBEARBEITUNG DREIDIMENSIONALER WERKSTÜCKE**
METHOD FOR MILLING THREE-DIMENSIONAL WORKPIECES
PROCEDE POUR FRAISER DES PIECES TRIDIMENSIONNELLES

(30) Priorität: 30.11.1995 DE 19544573
(43) Veröffentlichungstag der Anmeldung: 16.09.1998
(73) Patentinhaber: Pauser, Helmut, 73054 Eislingen (DE)
(72) Erfinder: Pauser, Helmut, 73054 Eislingen (DE)
(74) Vertreter: Wolf, Eckhard, Dr.-Ing.
(86) Internationale Anmeldenummer: EP9604740
(87) Internationale Veröffentlichungsnummer: WO9720259

(56) Entgegenhaltungen:
- EP-A- 0 655 668
- EP-A- 0 738 583
- WO-A-90/03893
- WO-A-95/15254
- DE-A- 3 143 847
- DE-A- 3 416 660
- DE-A- 3 715 518
- DE-A- 4 212 175
- US-A- 5 156 700
- US-A- 5 288 186

## Beschreibung

Die Erfindung betrifft ein Verfahren zur Fräsbearbeitung dreidimensionaler Werkstücke, bei welchem eine vorzugsweise in Form von 3D-CAD-Daten vorliegende Geometriebeschreibung des Werkstücks numerisch in 2D- oder 3D-Daten mehrerer Schichten gleicher oder unterschiedlicher Dicke zerlegt und ausgehend von diesen in schichtweise abzuarbeitende NC-Fräsprogramme umgesetzt wird.

Bei einem bekannten Verfahren dieser Art nach WO-A-9515254 werden unbearbeitete plattenförmige Rohlinge zunächst auf einer ersten Palette fixiert und in einer ersten Bearbeitungsstation bearbeitet (Konturfräsen Unterseite). In einem zweiten Bearbeitungsschritt wird die vorbearbeitete Platte mit der ersten Palette um 180° gewendet und auf der zuvor bearbeiteten, auf einer zweiten Palette befindlichen Platte positioniert. Nach Abnehmen der ersten Palette wird in einem dritten Bearbeitungsschritt zunächst eine Nachbearbeitung vorgenommen und in einem vierten Bearbeitungsschritt an der Oberseite plan- und konturgefräst. Bei dieser Arbeitsweise wird als nachteilig empfunden, daß beim Fügevorgang Positioniertoleranzen auftreten, da bei unterschiedlichen Einspannungen des Fräswerkzeugs und des Werkstücks gearbeitet wird. Ein weiterer Nachteil ist darin zu sehen, daß von oben nach unten gefräst wird, und dadurch die Spanabfuhr zu wünschen übrig läßt. Dies wirkt sich vor allem bei tiefen Konturen aus, bei denen sich Reststoffe oder Späne ansammeln, die nur schwer zu entfernen sind.

Weiter ist es bei einer Drehmaschine an sich bekannt (DE-A-3426666), ein drehendes Werkstück mit einem feststehenden Drehmeißel von unten her zu bearbeiten, so daß Späne nach unten fallen können.

Bei einer Bearbeitungsmaschine zur Herstellung von Werkstükken aus Schichtmaterial ist es bekannt (WO-A-9003893), Platten aus einem Band mittels eines Lasers auszuschneiden und zu formen. Die Platten werden sodann miteinander von unten verbunden, wobei Restmaterial mit Hilfe eines Laser weggeschnitten wird.

Ausgehend hiervon liegt der Erfindung die Aufgabe zugrunde, ein Verfahren zur Fräsbearbeitung dreidimensionaler Werkstücke der eingangs angegebenen Art zu entwickeln, bei welchen beim Fügevorgang keine Positioniertoleranzen auftreten und immer bei derselben Einspannung der Fräs werkzeuge und des Werkstücks gearbeitet wird. Außerdem soll eine gute Spanabfuhr gewährleistet sein.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Das erfindungsgemäße Verfahren unterscheidet sich von dem bekannten Verfahren vor allem durch folgende Verfahrensschritte:
a) Die unbearbeiteten plattenförmigen Rohlinge mit vorgegebener, gegebenenfalls variabler Wandstärke werden nacheinander mit ihrer nach oben weisenden Breitseitenfläche mit der nach unten weisenden Breitseitenfläche einer Grundstruktur oder eines zuvor bearbeiteten Rohlings flächig verbunden,
b) sodann wird der unbearbeitete Rohling nach Maßgabe des für die betreffende Schicht abzuarbeitenden NC-Fräsprogramms von der nach unten weisenden freien Breitseite aus über Kopf mit von unten nach oben weisenden Fräswerkzeugen schrittweise in mehreren, in konstanten oder variablen Zeilenabständen übereinander angeordneten Fräsbahnen bearbeitet,
c) wobei der Verbindungsbereich zwischen zwei schichtbildenden Rohlingen überlappend bearbeitet wird.

Das erfindungsgemäße Verfahren eignet sich besonders für die Herstellung von Werkstücken mit einer Vorzugsrichtung, beispielsweise für die Herstellung von Gießformen oder Erodierelektroden, in deren Konturen sich die Entformrichtung als Vorzugsrichtung wiederspiegelt. Die erfindungsgemäße Schichttechnik ermöglicht eine standardisierte Werkzeugauswahl, da immer relativ dünne gleichartige Schichten bearbeitet werden müssen. Die Fräsdaten können bei gegebenem Werkstoff optimiert werden. Insbesondere ergeben sich bei gegebener Schichtdicke und gleichem Werkstoff immer die gleichen Fräsparameter, wie Vorschub-Drehzahl und Zeilenabstand (Offset-Step). Durch das erfindungsgemäße Überkopf-Fräsen wird eine gute Span- und Materialabfuhr gewährleistet. Dieser Vorteil wirkt sich vor allem bei tiefen Konturen aus, in denen sich sonst Reststoffe und Späne ansammeln könnten, die nur schwer zu entfernen sind. Weiter wird bei dem erfindungsgemäßen Überkopf-Fräsen sichergestellt, daß an der Fügestelle austretender Klebstoff zur Seite des zuletzt aufgebrachten unbearbeiteten Rohlings abfließt und beim anschließenden Bearbeitungsvorgang mit den Spänen abtransportiert wird. Auch das über die Fräswerkzeuge der Bearbeitungsstelle zugeführte Kühlschmiermittel kann beim Überkopfarbeiten unter Mitnahme der Frässpäne leicht nach unten abfließen.

Eine bevorzugte Ausgestaltung der Erfindung sieht vor, daß die plattenförmigen Rohlinge von einem Plattenstapel entnommen oder von einer Vorratsrolle abgezogen und abgelängt werden. Die unbearbeiteten Rohlinge werden danach mit ihrer nach oben weisenden Breitseitenfläche gegen die nach unten weisende Breitseitenfläche des zuvor bearbeiteten Rohlings flächig angeklebt, angeschweißt oder angelötet. Zur Einsparung von Klebstoff brauchen die unbearbeiteten Rohlinge nur an den Kontaktstellen mit den zuvor bearbeiteten Rohlingen partiell mit Klebstoff beschichtet zu werden.

Um eine exakte Ausrichtung der Planfläche für die nächste Schichtverklebung und eine hohe Maßgenauigkeit zu gewährleisten, ist es von Vorteil, wenn die zuletzt angebrachten Rohlinge vor oder nach der Konturbearbeitung unter Einstellung eines definierten Dickenmaßes plangefräst werden.

Die Umsetzung der Geometriedaten in die NC-Programme für die einzelnen Schichten erfolgt nach Maßgabe einer vorgegebenen Frässtrategie. Dabei ist insbesondere der Zeilenabstand beim Fräsvorgang vorzugeben, der die Genauigkeit und Oberflächengüte des Werkstücks bestimmt. Im Interesse eines glatten Übergangs an der Trennstelle zwischen zwei Schichten ist es von Vorteil, wenn die ersten Zeilen nicht voll ausgefräst werden und erst beim Bearbeiten der nächsten Schicht zusammen mit dem Kleber abgefräst werden. In diesem Falle wird also der Verbindungsbereich zwischen zwei Rohlingen überlappend bearbeitet. Der Zeilenabstand kann vor allem bei Schrägkonturen auch variabel gewählt werden, um eine definierte Rauhtiefe zu erhalten. Das NC-Programm bestimmt in diesem Falle selbsttätig weitere Zwischenschritte, die dafür sorgen, daß bei variablen Anstellwinkeln der Zeilenabstand angepaßt wird.

Bei Graphitwerkstücken, die überwiegend für Elektroden für die Senkerodiertechnik verwendet werden, ist es wichtig, daß die Werkstücke durchgehend leitfähig sind. Hier wird zweckmäßig ein leitfähiger Kleber eingesetzt. Weiter werden dort Spülbohrungen benötigt, die abgetragenes Material abführen und gleichzeitig eine Kühlfunktion übernehmen können. Diese Spülbohrungen können bei der Fräsbearbeitung dadurch eingebracht werden, daß in tieferen Schichten Teile abgetragen werden, die von höheren Schichten überlappt werden. Die Fräskanäle können über Stichbohrungen nach außen geführt werden.

Zur Erhöhung der Leitfähigkeit zwischen den einzelnen Schichten kann es erforderlich sein, im Fräsverfahren eingebrachte Durchbrüche vorzusehen, in die nach Fertigstellung des Werkstücks leitfähige Stifte eingeschoben werden können.

Das erfindungsgemäße Verfahren eignet sich besonders zur Herstellung von Gießformen aus Metall, Keramik oder Kunststoff, zur Herstellung von Senkerodierelektroden aus Graphit und zur Herstellung von Modellen oder Prototypen aus Metall, Keramik, Kunststoff oder Holzwerkstoffen.

Im folgenden wird die Erfindung anhand der Zeichnung näher erläutert. Es zeigen
- Fig. 1a und b: eine schematische grafische Darstellung einer Werkstückgeometrie mit zwei Vorschlägen für eine Schichtzerlegung mit konstanter und variabler Schichtdicke;

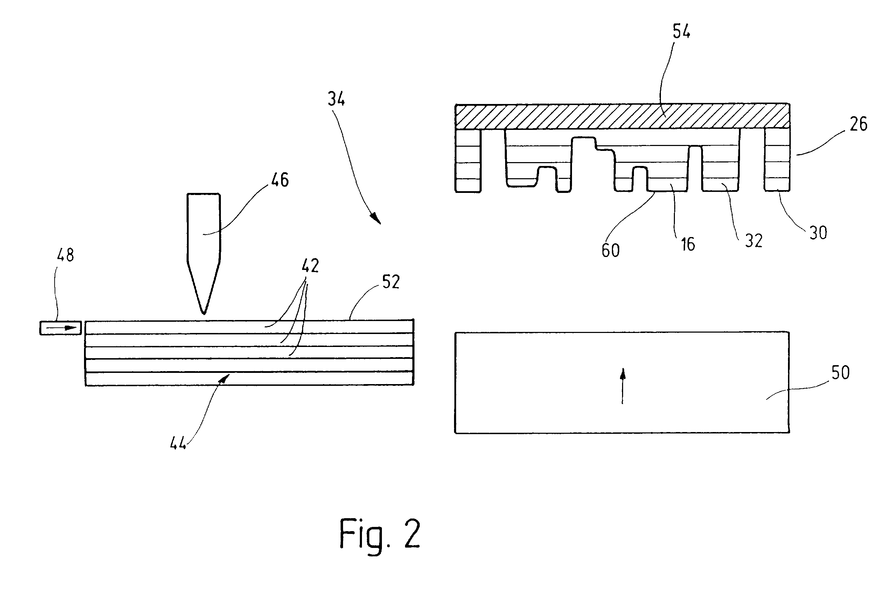

- Fig. 2: ein Schema einer Beschickungseinrichtung in einem Fräszentrum zur Herstellung dreidimensionaler Werkstücke;
- Fig. 3a bis c: drei typische Fräsbearbeitungszustände;
- Fig. 4a bis f: eine Folge von Zwischenstufen bei der Bearbeitung eines Werkstücks nach Fig. 1b in schematischer Darstellung.

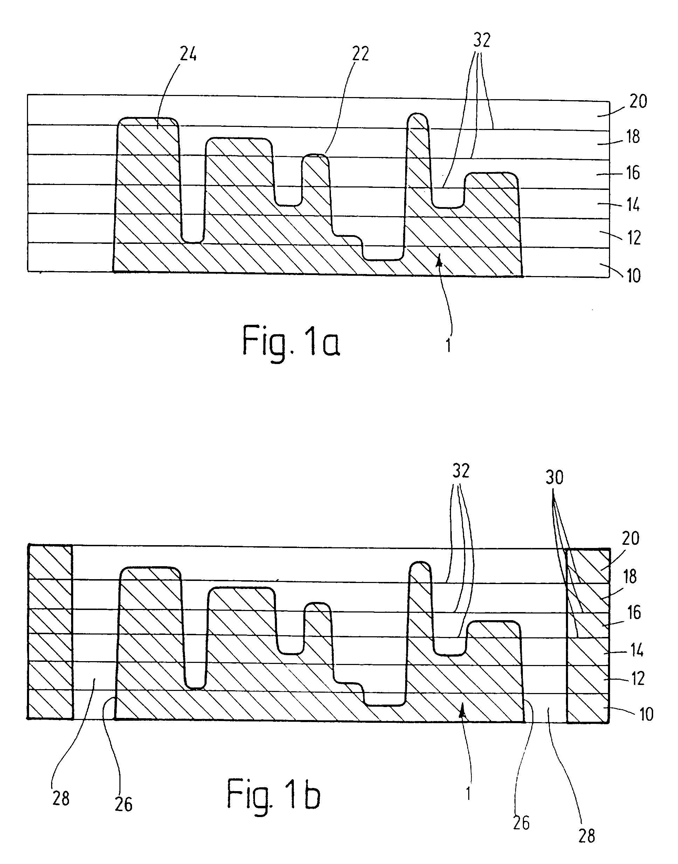

Das nachstehend anhand der Zeichnung beschriebene Verfahren ist zur Fräsbearbeitung komplizierter dreidimensionaler Werkstücke, beispielsweise von Gießformen oder Erodierelektroden, bestimmt. Die Geometrie des Werkstücks 1 wird zunächst mit Hilfe einer geeigneten Computersoftware in Form von 3D-CAD-Daten erfaßt. Es handelt sich dabei meist um Geometrien, die wegen ihrer Kompliziertheit und ihrer tief eingeschnittenen Konturen zur Fräsbearbeitung aus dem Vollen nicht geeignet sind. Die Fertigung erfolgt daher nach der Schichtmethode, bei der das Werkstück 1 sukzessive aus plattenförmigen Materialschichten 10,12,14,16,18,20 mit gleicher (Fig. 1a) oder variabler (Fig. 1b) Schichtdicke zusammengesetzt wird. Die Schichtdicke wird dabei so gewählt, daß in jeder Schicht an den zu bearbeitenden Stellen eine für einen Fräsvorgang ausreichende Materialstärke stehenbleibt. Dies ist im Falle der äquidistanten Schichtaufteilung nach Fig. la an den Stellen 22 und 24 nicht der Fall, weshalb bei diesem Bearbeitungsbeispiel die in Fig. 1b gezeigte Konfiguration, bei welcher die Dicke der Schicht 16 kleiner als die der übrigen ist, bevorzugt wird. Außerdem werden bei der in Fig. 1b gezeigten Konfiguration außerhalb des Werkstückaußenrandes 26 durch einen Zwischenraum 28 von diesem getrennte Stützzonen 30 vorgesehen, die in allen Verfahrensstufen eine exakte Positionsbestimmung der Verbindungsebenen 32 zwischen den Schichten gewährleisten.

Nach erfolgter Festlegung der Schichten 10 bis 20 wird der 3D-CAD-Datensatz der Werkstückgeometrie über eine Softwareroutine in 2D- oder 3D-Daten der einzelnen Schichten 10 bis 20 zerlegt. Bei zusätzlicher Vorgabe der Frässtrategie (insbesondere Fräserauswahl für Vor- und Feinfräsen, Vorschubgeschwindigkeit und Zeilenabstand) können aus den so gewonnenen schichtbezogenen Konturdaten die schichtweise abzuarbeitenden NC-Fräsprogramme kreiert werden.

Die praktische Umsetzung der Fräsprogramme am Werkstück erfolgt in einer CNC-Fräsmaschine 34, die neben mindestens einem mit Fräswerkzeugen 36,38,40 bestückbaren Fräskopf 35 ein mit plattenförmigen Rohlingen 42 bestücktes Rohlingmagazin 44, eine Kleberauftragsvorrichtung 46 und eine ein Verschiebeorgan 48 und ein Anpreßorgan 50 aufweisende Handhabungsvorrichtung für die Rohlinge 42 aufweist.

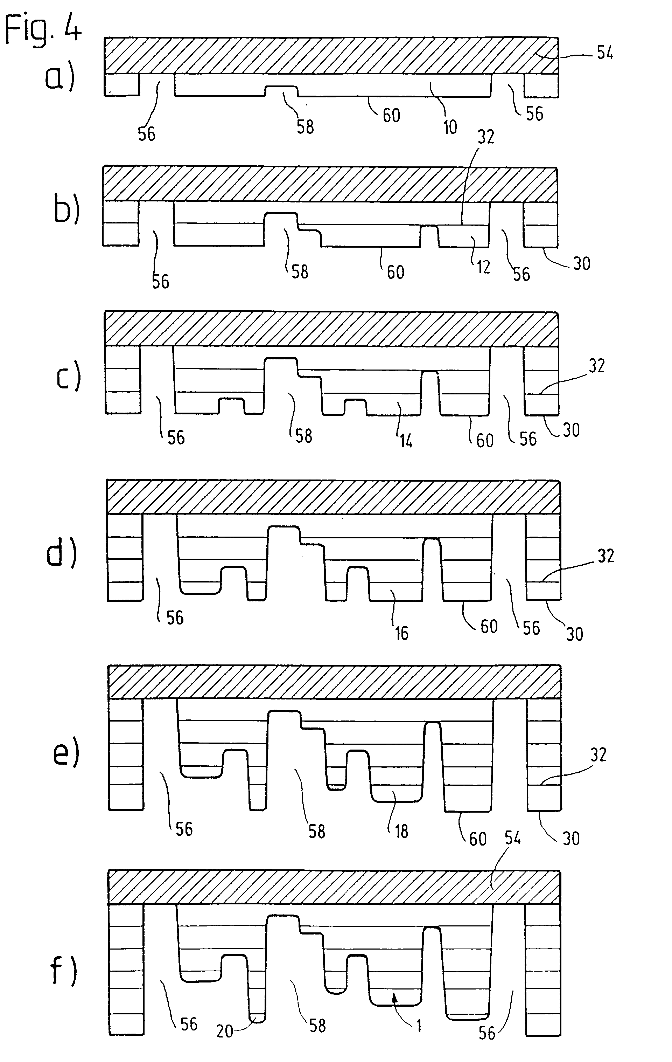

Zur Fertigung des Werkstücks 1 wird zunächst der oberste Rohling 42 an seiner nach oben weisenden Breitseitenfläche 52 mit Hilfe der Auftragsvorrichtung 46 mit Klebstoff beschichtet und mit dem Verschiebeorgan 48 und dem Anpreßorgan 50 an einer an einem nicht dargestellten Werkzeughalter angeordneten Grundplatte 54 als Schicht 10 flächig angeklebt. Sodann wird das der Schicht 10 zugeordnete NC-Fräsprogramm abgearbeitet und dabei die in Fig. 4a gezeigten Konturen 56,58 von der Breitseite 60 der Schicht 10 her eingebracht. Nach Vollendung der Konturbearbeitung der ersten Schicht 10 wird ein weiterer Rohling 42 vom Magazin 44 entnommen und mit seiner klebstoffbeschichteten Breitseitenfläche 52 mit der freien Breitseitenfläche 60 der Schicht 10 verbunden (Fig. 4b). Dieser Rohling wird nach Maßgabe des der Schicht 12 zugeordneten NC-Programms unter Bildung der Konturen 56,58 von der freien Breitseitenfläche 60 aus bearbeitet. Dieser Vorgang wiederholt sich dann nacheinander für die Schichten 14,16,18 und 20 (Fig. 4c bis f) bis zur Fertigstellung des Werkstücks 1.

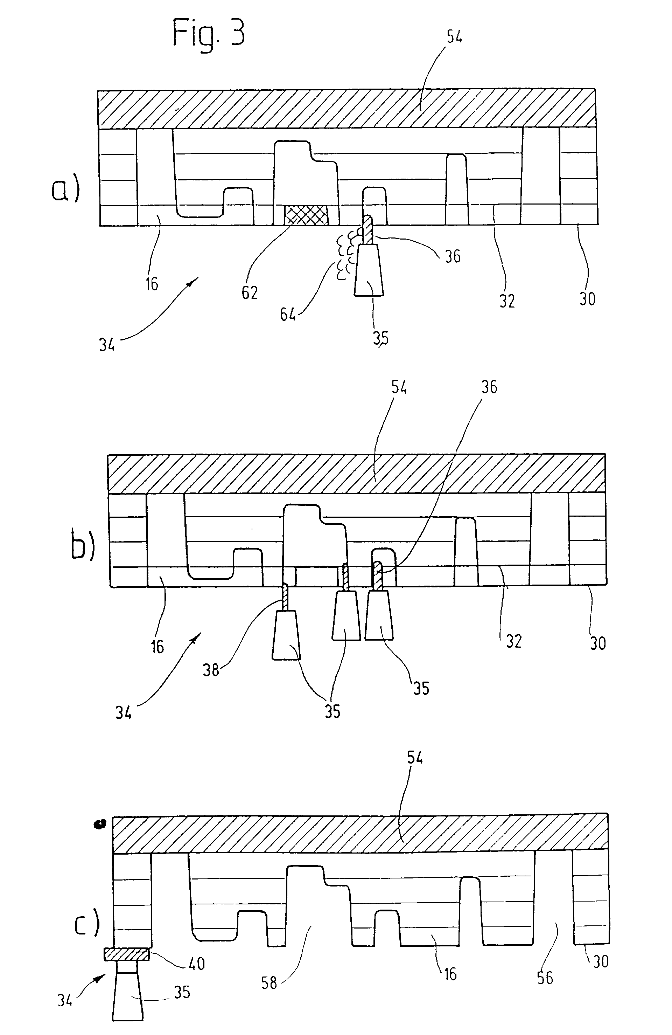

Wie aus den Fig. 3a und b für die Bearbeitungsstufe nach Fig. 4d (Bearbeitung der Schicht 16) zu ersehen ist, erfolgt die Konturbearbeitung über Kopf mit den von unten nach oben weisenden Fingerfräsern 36,38, wobei das Fräswerkzeug 36 zur Vorbearbeitung und das Fräswerkzeug 38 zur Feinbearbeitung eingesetzt wird. Die beim Fräsvorgang anfallenden Reststücke 62 und Späne 64 fallen aufgrund der Schwerkraft nach unten. Die Spanabfuhr wird dabei unterstützt durch ein über den Fräskopf in Richtung Werkstück 1 nach oben versprühtes und am Werkstück nach unten umgelenktes Kühlschmiermittel. Wie insbesondere aus Fig. 3b zu ersehen ist, erfolgt die Konturbearbeitung schrittweise in von unten nach oben fortschreitenden Fräsbahnen, beispielsweise in Schritten von jeweils 0,5 mm, wobei die letzten Fräsbahnen die Verbindungsebene 32 überlappend in die zuvor bearbeitete Schicht 14 eingreift und dafür sorgt, daß sich ein glatter, klebstofffreier Übergang zwischen den Schichten 14,16 ergibt.

Um inkrementale Fehler beim Schichtaufbau zu vermeiden, wird vor oder nach einer jeden Konturbearbeitung die freie Breitseitenfläche 60 mit einem Planfräser 40 auf ein vorgeschriebenes Abstandsmaß gebracht. Die am Außenrand befindlichen Stützzonen 30 sorgen dafür, daß der nächste Rohling 42 exakt in der Verbindungsebene 32 ausgerichtet und mit dem zuvor bearbeiteten Rohling verbunden werden kann. Nach Fertigstellung des Werkstücks 1 werden die die Stützzonen 30 bildenden Aufbauten von der Grundplatte 54 abgenommen und das Werkstück, gegebenenfalls nach vorheriger Endbearbeitung und Temperaturbehandlung seinem bestimmungsgemäßen Gebrauch zugeführt.

Zusammenfassend ist folgendes festzustellen: Die Erfindung bezieht sich auf ein Verfahren zur Fräsbearbeitung dreidimensionaler Werkstücke, insbesondere zur Herstellung von Gießformen und Erodierelektroden. Bei dem Verfahren wird eine vorzugsweise in Form von 3D-CAD-Daten vorliegende Geometriebeschreibung des Werkstücks 1 numerisch in 2D- oder 3D-Daten mehrerer Schichten 10 bis 20 gleicher oder unterschiedlicher Dicke zerlegt und von diesen ausgehend in schichtweise abzuarbeitende NC-Fräsprogramme umgesetzt. Für die Herstellung des Werkstücks 1 werden plattenförmige Rohlinge 42 mit vorgegebener, gegebenenfalls variabler Wandstärke nacheinander mit einer Grundplatte 54 oder einem zuvor bearbeiteten Rohling 42 flächig verbunden und nach Maßgabe des für die betreffende Schicht 10 bis 20 abzuarbeitenden NC-Fräsprogramms von ihrer nach unten weisenden freien Breitseite 60 aus über Kopf mit von unten nach oben weisenden Fräswerkzeugen 36, 38,40 bearbeitet.

## Patentansprüche

1. Verfahren zur Fräsbearbeitung dreidimensionaler Werkstücke, bei welchem eine vorzugsweise in Form von 3D-CAD-Daten vorliegende Geometriebeschreibung des Werkstücks (1) numerisch in 2D- oder 3D-Daten mehrerer Schichten (10 bis 20) gleicher oder unterschiedlicher Dicke zerlegt und von diesen ausgehend in schichtweise abzuarbeitende NC-Fräsprogramme umgesetzt wird, und bei welchem unbearbeitete plattenförmige Rohlinge (42) mit vorgegebener, gegebenenfalls variabler Wandstärke nacheinander mit ihrer nach oben weisenden Breitseitenfläche (52) mit der nach unten weisenden Breitseitenfläche (60) einer Grundstruktur oder eines zuvor bearbeiteten Rohlings (42) flächig verbunden und sodann nach Maßgabe des für die betreffende Schicht (10 bis 20) abzuarbeitenden NC-Fräsprogramms von ihrer nach unten weisenden freien Breitseitenfläche (60) aus über Kopf mit von unten nach oben weisenden Fräswerkzeugen schrittweise in mehreren, in konstanten oder variablen Zeilenabständen übereinander angeordneten Fräsbahnen bearbeitet werden, wobei der Verbindungsbereich (32) zwischen zwei schichtbildenden Rohlingen (42) überlappend bearbeitet wird.

2. Verfahren nach Anspruch 1, **dadurch gekennzeichnet,** daß die plattenförmigen Rohlinge (42) von einem Plattenstapel (44) entnommen oder von einer Vorratsrolle abgezogen und abgelängt, werden.

3. Verfahren nach Anspruch 1 oder 2, **dadurch gekennzeichnet**, daß die unbearbeiteten Rohlinge (42) gegen die Grundstruktur oder den zuvor bearbeiteten Rohling (42) flächig angeklebt, angeschweißt oder angelötet werden.

4. Verfahren nach einem der Ansprüche 1 bis 3, **dadurch gekennzeichnet,** daß die unbearbeiteten Rohlinge (42) an den Kontaktstellen mit dem zuvor bearbeiteten Rohling partiell mit Klebstoff beschichtet werden.

5. Verfahren nach einem der Ansprüche 1 bis 4, **dadurch gekennzeichnet**, daß aus den Rohlingen (42) vorzugsweise im Außenbereich des zu bearbeitenden Werkstücks (1) Stützzonen (30) für die nachfolgenden Rohlinge (42) ausgefräst werden, die bei einer Schlußbearbeitung vom fertigen Werkstück (1) abgetrennt werden.

6. Verfahren nach einem der Ansprüche 1 bis 5, **dadurch gekennzeichnet**, daß die Rohlinge (42) an ihren paarweise miteinander zu verbindenden Breitseitenflächen (52,60) mit Klebstoff oder einer Klebstoffkomponente beschichtet werden.

7. Verfahren nach einem der Ansprüche 1 bis 6, **dadurch gekennzeichnet**, daß die zuletzt angebrachten Rohlinge (42) vor oder nach der Konturbearbeitung unter Einstellung eines definierten Dickenmaßes plangefräst werden.

8. Verfahren nach einem der Ansprüche 1 bis 7, **dadurch gekennzeichnet**, daß das Werkstück (1) während des Fräsvorgangs mit einem nach oben weisenden Kühlschmiermittelstrahl beaufschlagt wird.

9. Verfahren nach einem der Ansprüche 1 bis 8, **dadurch gekennzeichnet**, daß zur Verbindung der Rohlinge (42) ein elektrisch leitfähiger Kleber verwendet wird.

10. Verfahren nach einem der Ansprüche 1 bis 9, **dadurch gekennzeichnet**, daß in die freien Breitseitenflächen (60) mindestens einer der Schichten (10 bis 20) Kanäle oder Durchbrüche eingefräst werden.

11. Verfahren nach Anspruch 10, **dadurch gekennzeichnet,** daß die Durchbrüche mit elektrisch leitfähigen Stiften bestückt werden.

12. Verfahren nach einem der Ansprüche 1 bis 11, **dadurch gekennzeichnet**, daß das fertige Werkstück (1) getempert wird.

13. Verwendung des Verfahrens nach einem der Ansprüche 1 bis 12 zur Herstellung von Gießformen aus Metall, Keramikmaterial oder Kunststoff.

14. Verwendung des Verfahrens nach einem der Ansprüche 1 bis 12 zur Herstellung von Senkerodierelektroden aus Graphit.

15. Verwendung des Verfahrens nach einem der Ansprüche 1 bis 12 zur Herstellung von Modellen oder Prototypen aus Metall, Keramikmaterial, Kunststoff oder Holzwerkstoffen.

## Claims

1. A method for milling three-dimensional workpieces, in which a geometric description of the workpiece (1), preferably in the form of 3D CAD data, is numerically broken down into 2D or 3D data of a plurality of layers (10 to 20) of equal or differing thickness and, starting therefrom, is transformed into NC milling programs which are to be executed layer-by-layer, and in which not-yet-machined plate-shaped blanks (42) having a predetermined, optionally variable, wall thickness are joined successively in a laminar manner with their upwardly oriented broad side surface (52) to the downwardly oriented broad side surface (60) of a base structure (54) or a previously machined blank (42) and then machined, in a stepwise manner along a plurality of milling paths which are arranged above each other at constant or variable line offsets, according to the NC-milling program applicable to the corresponding layer (10 to 20) at their lower exposed broad side (60) from below with upwardly directed milling tools, wherein the region of the joint (32) between two layer-forming blanks (42) is machined in an overlapping manner.

2. The method of claim 1, **characterized in that** the plate-shaped blanks (42) are taken from a stack (44) of blanks or pulled of a supply roll and cut to length.

3. The method of claim 1 or 2, **characterized in that** the not-yet-machined blanks (42) are glued, welded or soldered to the base structure or the previously machined blank (42) in a laminar manner.

4. The method of one of claims 1 to 3, **characterized in that** the not-yet-machined blanks (42) are partially covered with adhesive at the points of contact with the previously machined blank.

5. The method of one of claims 1 to 4, **characterized in that** support areas (30) for the following blanks (42) are milled from the blanks (42), preferably in the region outside the workpiece to be machined, which support areas are removed from the finished workpiece (1) by a final machining step.

6. The method of one of claims 1 to 5, **characterized in that** the blanks (42) are covered with an adhesive or an adhesive component at their broad side surfaces (52, 60) which are to be joined to each other.

7. The method of one of claims 1 to 6, **characterized in that** the blanks (42) which are added last are plane-milled before or after the contour machining under setting of a defined thickness measure.

8. The method of one of claims 1 to 7, **characterized in that** the workpiece (1) is subjected to an upwardly directed jet of coolant and lubricant during the milling operation.

9. The method of one of claims 1 to 8, **characterized in that** an electrically conducting adhesive is used to join the blanks (42).

10. The method of one of claims 1 to 9, **characterized in that** channels or openings are milled into the free broad side surface (60) of at least one of the layers (10 to 20).

11. The method of claim 10, **characterized in that** the openings are outfitted with electrically conducting pins.

12. The method of one of claims 1 to 11, **characterized in that** the finished workpiece (1) is tempered.

13. Application of the method of one of claims 1 to 12 to produce casting moulds made of metal, ceramic material or synthetic material.

14. Application of the method of one of claims 1 to 12 to produce cavity-sinking erosion electrodes made of graphite.

15. Application of the method of one of claims 1 to 12 to produce models or prototypes made of metal, ceramic material, synthetic material or wood.

## Revendications

1. Procédé de fraisage de pièces tridimensionnelles, dans lequel une représentation géométrique de préférence sous forme de données de CAO 3D de la pièce (1) est décomposée numériquement en données 2D ou 3D de plusieurs couches (10 à 20) d'épaisseur identique ou différente et, à partir de celles-ci, est transformée en programmes de fraisage CN à exécuter par couches, et dans lequel des ébauches en forme de plaque (42) non usinées à épaisseur de paroi fixée et éventuellement variable sont jointes l'une après l'autre à plat par leur grande face dirigée vers le haut (52) à la grande face dirigée vers le bas (60) d'une structure de base ou d'une ébauche (42) usinée précédemment et sont ensuite usinées pas à pas sur plusieurs chemins de fraisage situés les uns au-dessus des autres à des interlignes constants ou variables, depuis leur grande face libre dirigée vers le bas (60), en l'air, avec des outils de fraisage dirigés de bas en haut, suivant le programme de fraisage CN à exécuter pour la couche considérée (10 à 20), la zone de jonction (32) entre deux ébauches (42) formant des couches étant usinée avec chevauchement.

2. Procédé selon la revendication 1, caractérisé par le fait que les ébauches en forme de plaque (42) sont enlevées d'une pile de plaques (44) ou tirées d'une bobine alimentaire et coupées à longueur.

3. Procédé selon l'une des revendications 1 et 2, caractérisé par le fait que les ébauches (42) non usinées sont collées, soudées ou brasées à plat contre la structure de base ou l'ébauche (42) usinée précédemment.

4. Procédé selon l'une des revendications 1 à 3, caractérisé par le fait que les ébauches (42) non usinées sont partiellement revêtues de colle aux endroits où elles sont en contact avec l'ébauche usinée précédemment.

5. Procédé selon l'une des revendications 1 à 4, caractérisé par le fait que dans les ébauches (42) sont fraisées, de préférence dans la partie extérieure de la pièce (1) à usiner, des zones d'appui (30) pour les ébauches (42) suivantes, qui sont détachées, lors d'un usinage final, de la pièce (1) terminée.

6. Procédé selon l'une des revendications 1 à 5, caractérisé par le fait que les ébauches (42) sont revêtues de colle ou d'un constituant de colle sur leurs grandes faces (52, 60) à joindre deux à deux.

7. Procédé selon l'une des revendications 1 à 6, caractérisé par le fait que les ébauches (42) appliquées en dernier sont, avant ou après l'usinage des contours, surfacées avec réalisation d'une épaisseur définie.

8. Procédé selon l'une des revendications 1 à 7, caractérisé par le fait que pendant le fraisage, la pièce (1) reçoit un jet de fluide de refroidissement et lubrifiant dirigé vers le haut.

9. Procédé selon l'une des revendications 1 à 8, caractérisé par le fait que pour la jonction des ébauches (42) est utilisée une colle conductrice de l'électricité.

10. Procédé selon l'une des revendications 1 à 9, caractérisé par le fait que dans les grandes faces libres (60) d'au moins une des couches (10 à 20) sont fraisés des canaux ou des trous traversants.

11. Procédé selon la revendication 10, caractérisé par le fait que les trous traversants sont garnis de broches conductrices de l'électricité.

12. Procédé selon l'une des revendications 1 à 11, caractérisé par le fait que la pièce (1) terminée est recuite.

13. Utilisation du procédé selon l'une des revendications 1 à 12 pour la fabrication de moules de coulée en métal, céramique ou plastique.

14. Utilisation du procédé selon l'une des revendications 1 à 12 pour la fabrication d'électrodes d'électro-érosion pour fonçage en graphite.

15. Utilisation du procédé selon l'une des revendications 1 à 12 pour la fabrication de modèles ou de prototypes en métal, céramique, plastique ou bois modifié.
